(19) Europäisches Patentamt

European Patent Office

Office européen des brevets

(11) **EP 0 558 958 B1**

(12) **EUROPÄISCHE PATENTSCHRIFT**

(45) Veröffentlichungstag und Bekanntmachung des Hinweises auf die Patenterteilung:
**17.07.1996 Patentblatt 1996/29**

(51) Int Cl.[6]: **F16H 61/46**

(21) Anmeldenummer: **93102007.7**

(22) Anmeldetag: **09.02.1993**

(54) **Hydrostatischer Fahrantrieb**

Hydrostatic transmission

Transmission hydrostatique

(84) Benannte Vertragsstaaten:
**DE FR GB IT SE**

(30) Priorität: **04.03.1992 DE 4206833**

(43) Veröffentlichungstag der Anmeldung:
**08.09.1993 Patentblatt 1993/36**

(73) Patentinhaber: **BRUENINGHAUS HYDROMATIK GMBH**
**D-89275 Elchingen (DE)**

(72) Erfinder:
• **Bausenhart, Heinz**
**W-7916 Nersingen-Leibi (DE)**
• **Leibing, Karl-Heinz**
**W-7929 Gerstetten-Dettingen (DE)**

(74) Vertreter: **Körber, Wolfhart, Dr.rer.nat. et al**
**Patentanwälte**
**Mitscherlich & Partner,**
**Postfach 33 06 09**
**80066 München (DE)**

(56) Entgegenhaltungen:
EP-A- 0 325 679          EP-A- 0 426 443
GB-A- 2 152 640          US-A- 2 518 578

• **PATENT ABSTRACTS OF JAPAN vol. 9, no. 282 (M-428)(2005) 9. November 1989 & JP-A-60 125 455 (HITACHI KENKI K.K.)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen hydrostatischen Fahrantrieb nach dem Oberbegriff des Anspruches 1.

Aus der Praxis sind derartige Fahrantriebe bekannt und beispielsweise im Sonderdruck Nr. 1/79 (fluid Februar 1979), herausgegeben von der Hydromatik GmbH, für einen Radlader beschrieben. Das hydrostatische Getriebe dieses bekannten Fahrantriebs ist zwecks Änderung seines Übersetzungsverhältnisses in einem ersten Fahrbereich primär, d.h. durch Änderung des Hubvolumens der Hydropumpe, und in einem zweiten Fahrbereich sekundär, d.h. durch Änderung des Hubvolumens des Hydromotors, verstellbar und weist somit einen großen Wandlungsbereich auf, der die Aufbringung großer Zugkräfte einerseits und die Erzielung hoher Fahrgeschwindigkeiten andererseits erlaubt. Sowohl die Primär- als auch die Sekundärverstellung erfolgen in Abhängigkeit von einem der Drehzahl des Antriebsmotors proportionalen, sich mit dessen Belastung ändernden Steuerdruck. Zusätzlich ist eine Druckregelung vorgesehen, die den Hydromotor in Abhängigkeit von dem sich ebenfalls mit der Belastung ändernden Arbeitsdruck in der Arbeitsleitung so verstellt, daß er das jeweils abverlangte, zur Überwindung des jeweiligen Fahrwiderstandes erforderliche Drehmoment abgibt.

Dieser bekannte Fahrantrieb hat sich in der Praxis bewährt; allerdings führt er in bestimmten Fahrsituationen zu überflüssigen und störenden Unregelmäßigkeiten der Fahrgeschwindigkeit. Es sind dies beispielsweise Fahrsituationen mit Änderungen der Getriebebelastung, beispielsweise aufgrund von Belastungsschwankungen eines zum Fahrantrieb hinzugeschalteten Arbeitsantriebs oder von Schwankungen des Fahrwiderstandes, die so kurzzeitig auftreten, z.B. beim Überfahren von sogen. Wellblechpisten oder von Schlaglöchern mit der Folge von Druckspitzen in der Arbeitsleitung oder Schlupf von Antriebsrädern, daß sie aufgrund der verwendeten drehzahlabhängigen Steuerung und Druckregelung zu einem unerwünscht schnellen Ansprechen und Verstellen des hydrostatischen Getriebes führen.

Aus der GB-A-2 152 640 ist ein hydrostatischer Fahrantrieb mit einem Hydromotor, dessen Hubvolumen in Abhängigkeit von seiner mit einer Sensoreinrichtung erfaßten Drehzahl verstellt wird, bekannt geworden. Die Sensoreinrichtung besteht dabei aus einer von der Welle des Hydromotors angetriebenen Meßpumpe zur Erzeugung eines drehzahlproportionalen Druckes. Dieser Druck entspricht in den oben beschriebenen Fahrsituationen mit kurzzeitig auftretenden Getriebebelastungen nicht der tatsächlichen Fahrgeschwindigkeit des Fahrzeuges über Grund, da beispielsweise bei unterschiedlicher Reaktion eines der angetriebenen Räder des Fahrzeuges eine Drehzahländerung des Hydromotors herbeiführt, obwohl keine entsprechende Fahrgeschwindigkeitsänderung vorliegt.

Es ist Aufgabe der Erfindung, den Fahrantrieb nach dem Oberbegriff des Anspruches 1 so weiterzubilden, daß Störungen der Sekundärverstellung seines hydrostatischen Getriebes durch wechselnde Getriebebelastungen der vorstehend geschilderten Art vermieden werden.

Diese Aufgabe wird durch die kennzeichnenden Merkmale des Anspruches 1 gelöst. Die im Stand der Technik bekannte drehzahlabhängige Steuerung und Druckregelung sowie der entsprechende Konstruktionsaufwand entfallen für die Sekundärverstellung, die nunmehr in Abhängigkeit von der tatsächlichen Fahrgeschwindigkeit über Grund durchgeführt wird. Auf diese Weise unterbleiben sämtliche Störungen der Sekundärverstellung durch kurzzeitige Wechsel der Getriebebelastungen; nur noch solche Belastungsänderungen, die eine entsprechende Änderung der Fahrgeschwindigkeit hervorrufen, wirken auf die Sekundärverstellung ein und führen zu einer Wandlung des Übersetzungsverhältnisses zwecks Anpassung an die jeweilige Belastungsänderung.

Obwohl nicht darauf beschränkt, eignet sich die Erfindung besonders für mobile Arbeitsmaschinen für den Off-Road-Einsatz, die aufgrund höherer Leistungen und der Verwendung von mechanischen Schaltgetrieben hohe Fahrgeschwindigkeiten erzielen. Hierbei sind insbesondere Radlader zu erwähnen, die bei höheren Geschwindigkeiten zu Nickschwingungen oder zum "Springen" neigen und bei erfindungsgemäßer Durchführung ihrer Sekundärverstellung mit gleichmäßiger, von den Nickschwingungen unbeeinflußter Geschwindigkeit fahren.

Die Primärverstellung des hydrostatischen Getriebes kann ebenfalls in Abhängigkeit von der Fahrgeschwindigkit, aber auch von der Drehzahl des Antriebsmotors mit dem Vorteil der Steuerung der Hydropumpe und des Hydromotors durch zwei unabhängige Parameter erfolgen. Bei Einsatz im rauhen Gelände, wobei üblicherweise im ersten Fahrbereich gefahren wird, kann eine schnelle Rückmeldung erhöhter Fahrwiderstände durch die sogen. Druckregelung der Hydropumpe erreicht werden; solange der Hydromotor auf maximales Hubvolumen eingestellt bleibt, ist diese Druckregelung wirksam und verstellt die Hydropumpe in Abhängigkeit von einem vom Arbeitsdruck in der Arbeitsleitung abgenommenen Steuersignal, wobei zunehmender Arbeitsdruck eine Verstellung in Richtung minimales Hubvolumen bewirkt.

Die Erfassung der Fahrgeschwindigkeit kann in unterschiedlicher Weise erfolgen, beispielsweise durch einen Sensor nach dem Radar-Dopplerprinzip oder durch elektronische Sensoren, wie Tachogeneratoren oder Impulsaufnehmer, die vorteilhafterweise an nicht angetriebenen Rädern angeordnet sind oder die Eingangsdrehzahlen von mechanischen Verteiler-Getrieben erfassen.

Bevorzugt sind elektronische Sensoreinrichtungen, da diese den Einsatz einer elektronischen Steuereinheit ermöglichen, die die aufgenommenen Steuersignale in Schwenkwinkel-Signale umwandelt und mit diesen die jeweilige Hydromaschine zwecks Verstellung deren Hubvolumens ansteuert. Das Umwandeln der Steuersignale erfolgt auf der Grundlage von wenigstens je einer in der elektronischen Steuereinheitgespeicherten Kennlinie des Schwenkwinkels bzw. des entsprechenden Hubvolumens jeder Hydromaschine in Abhängigkeit von dem vom jeweiligen Steuersignal erfaßten Parameter (Fahrgeschwindigkeit, Drehzahl bzw. Arbeitsdruck).

Gemäß einer Weiterbildung der Erfindung weisen die Kennlinien beider Hydromaschinen einen solchen gemeinsamen, vorgegebenen Schnittpunkt auf, daß sie einen Fahrbereich definieren, in dem die Hydropumpe und der Hydromotor gleichzeitig von der elektronischen Steuereinheit ansteuerbar sind. Günstig ist hierbei eine solche Lage des Schnittpunktes beider Kennlinien, daß der durch ihn definierte Fahrbereich ein zweiter Fahrbereich mittlerer Fahrgeschwindigkeit ist, an den sich ein erster Fahrbereich niedrigerer Fahrgeschwindigkeit mit alleiniger Ansteuerung der Hydropumpe sowie ein dritter Fahrbereich höherer Fahrgeschwindigkeit mit alleiniger Ansteuerung des Hydromotors anschließen. Zwecks Anpassung an unterschiedliche Einsatzbedingungen können die Kennlinien beider Hydromaschinen unterschiedliche Steigungen und auch einen nichtlinearen Verlauf aufweisen.

Der Beginn dieses zweiten Fahrbereichs kann dadurch verschoben werden, daß in eine an die elektronische Steuereinheit angeschlossene Vorgabeeinrichtung der Schnittpunkt der Kennlinien beider Hydromaschinen durch Verschieben der Kennlinie des Hydromotors vorgegeben wird.

Eine vorteilhafte Weiterbildung der Erfindung ist gekennzeichnet durch eine dritte Sensoreinrichtung zur Erfassung der jeweils eingestellten Solldrehzahl des Antriebsmotors und Abgabe eines entsprechenden Steuersignals an die elektronische Steuereinheit, die ein Programm zur Ermittlung der Drückung des Antriebsmotors aus den Steuersignalen der zweiten und der dritten Sensoreinrichtung enthält und mit zunehmender Drückung des Antriebsmotors die Kennlinie des Hydromotors und damit den Beginn des zweiten Fahrbereichs in Richtung Verringerung desselben verschiebt. Auf diese Weise verharrt das hydrostatische Getriebe bei Einsatz im beispielsweise rauhen Gelände für die Dauer der Drückung des Antriebsmotors im ersten Fahrbereich, was dann besonders vorteilhaft ist, wenn die Druckregelung zum Einsatz gelangt und, falls gewünscht, die Schwenkwinkel-Kennlinie der Hydropumpe flacher als diejenige des Hydromotors ausgelegt ist.

Nachstehend ist die Erfindung unter Bezugnahme auf die Zeichnung näher beschrieben. Es zeigen:

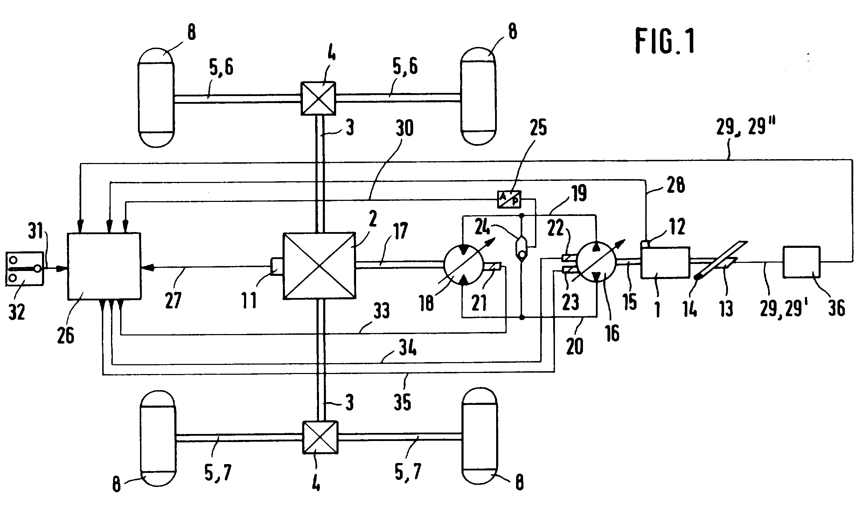

Fig. 1    ein Blockschaltbild eines Radladers, dessen Fahrantrieb ein hydrostatisches Getriebe umfaßt, dessen Übersetzungsverhältnis gemäß zweier Ausgestaltungen der Erfindung verstellbar ist,

Fig. 2    ein Diagramm, das das vom hydrostatischen Getriebe abgegebene Drehmoment über den gesamten Wandlungsbereich darstellt, und

Fig. 3    ein Diagramm, das die Kennlinie des Schwenkwinkels jeder der beiden Hydromaschinen des hydrostatischen Getriebes nach Fig. 1 über den gesamten Wandlungsbereich darstellt.

Der in der Zeichnung dargestellte Radlader umfaßt einen Antriebsmotor 1 mit verstellbarer Drehzahl, wie beispielsweise einen Dieselmotor, einen hydrostatischen Fahrantrieb, an den ein nicht gezeigter Arbeitsantrieb angeschlossen ist, und ein mechanisches Verteilergetriebe 2, das über je eine Kardanwelle 3 sowie je ein Differential 4 mit den Triebwellen 5 einer Vorderachse 6 und einer Hinterachse 7 mit je zwei Antriebsrädern 8 mechanisch verbunden ist.

Das Verteilergetriebe 2 ist zwecks Erfassung seiner Ausgangsdrehzahl, die der Fahrgeschwindigkeit v des Radladers proportional ist, mit einer ersten Sensoreinrichtung 11 in Form eines Drehzahlsensors versehen. Eine zweite und dritte Sensoreinrichtung 12 bzw. 13, die erstere ebenfalls in Form eines Drehzahlsensors und die letztere in Form eines Potentiometers, sind zur Erfassung der sich tatsächlich einstellenden Drehzahl n bzw. der Solldrehzahl des Antriebsmotors 1 vorgesehen. Zur Vorgabe der Solldrehzahl dient ein Gaspedal 14, dessen jeweilige Stellung vom Potentiometer 13 erfaßt wird.

Der hydrostatische Fahrantrieb umfaßt ein primär und sekundär verstellbares hydrostatisches Getriebe mit einer vom Antriebsmotor 1 über eine Antriebswelle 15 antreibbaren Hydropumpe 16, z.B. Axialkolbenpumpe in Schrägscheibenbauweise, und einem mit dem Verteilergetriebe 2 über eine Abtriebswelle 17 verbundenen Hydromotor 18, z.B. Axialkolbenmotor in Schrägachsenbauweise, der über zwei hydraulische Arbeitsleitungen 19, 20 an die Hydropumpe 16 angeschlossen ist. Die Hydropumpe 16 ist eine reversierbare Verstellpumpe und weist ebenso wie der als Verstellmotor ausgebildete Hydromotor 18 zwei Strömungsrichtungen auf. Beide Hydromaschinen 16, 18 sind zwecks Verstellung ihres Hubvolumens mit einer proportional-elektrischen Ansteuerung versehen. Im Fall des Hydromotors 18 umfaßt diese Ansteuerung einen Proportionalmagneten 21 und ein von diesem gesteuertes, nicht gezeigtes Proportionalventil sowie einen ebenfalls nicht gezeigten Stellzylinder, für den der Stelldruck aus der Hochdruckseite des Hydromotors entnommen wird. Die proportionalelektrische Ansteuerung für die Hydropumpe 16 entspricht prinzipiell der soeben beschriebenen Ansteuerung, umfaßt jedoch zwei Proportionalmagneten 22, 23, einen für Vorwärtsfahrt und einen für Rückwärtsfahrt.

Beide Arbeitsleitungen 19, 20 sind über Leitungsabschnitte an ein Wechselventil 24 angeschlossen, von dem aus ein weiterer Leitungsabschnitt zu einem p/A-Wandler 25 führt.

Der hydrostatische Fahrantrieb umfaßt weiterhin eine elektronische Steuereinheit 26, die auch mit Mikroprozessor ausgebildet sein kann. Eingangsgrößen für die elektronische Steuereinheit 26 sind die Ausgangsdrehzahl des Verteilergetriebes 2 stellvertretend für die Fahrgeschwindigkeit v des Fahrzeugs, die Drehzahl n des Antriebsmotors 1, dessen Solldrehzahl, der Arbeitsdruck im hydrostatischen Getriebe und die jeweils gewünschte Fahrtrichtung. Zur Übertragung der entsprechenden Signale ist die elektronische Steuereinheit 26 über Signalleitungen 27 bis 31 an die erste, zweite und dritte Sensoreinrichtung 11, 12 bzw. 13, an den p/A-Wandler 25 und an einen Fahrtrichtungsschalter 32 angeschlossen.

Als Ausgangsgrößen liefert die elektrische Steuereinheit 26 Steuer(strom)signale zu den Proportionalmagneten 21 bis 23 der proportional-elektrischen Ansteuerungen der Hydromaschinen 16, 18, um deren Schwenkwinkel $\alpha$ und damit deren Hubvolumen zu verstellen. Zur Übertragung dieser Steuer(strom)signale, nachstehend als Schwenkwinkel-Signale bezeichnet, ist die elektronische Steuereinheit 26 über Signalleitungen 33 bis 35 an den Proportionalmagneten 21 des Hydromotors 18 und an die Proportionalmagneten 22, 23 der Hydropumpe 16 angeschlossen.

Die elektronische Steuereinheit 26 ist mit einer Steuerungs-Schaltungslogik für die Primär- und die Sekundärverstellung des hydrostatischen Getriebes und mit einem Speicher ausgerüstet, in welchem gemäß einer ersten Ausgestaltung der Erfindung die Kennlinie $KL_1$ des Schwenkwinkels $\alpha$ der Hydropumpe 16 in Abhängigkeit von der Drehzahl n des Antriebsmotors 1 und die entsprechende Kennlinie $KL_2$ des Hydromotors 18 in Abhängigkeit von der Fahrgeschwindigkeit v gespeichert sind. Gemäß einer zweiten Ausgestaltung der Erfindung enthält der Speicher die Kennlinien beider Hydromaschinen 16, 18 in Abhängigkeit von der Fahrgeschwindigkeit v.

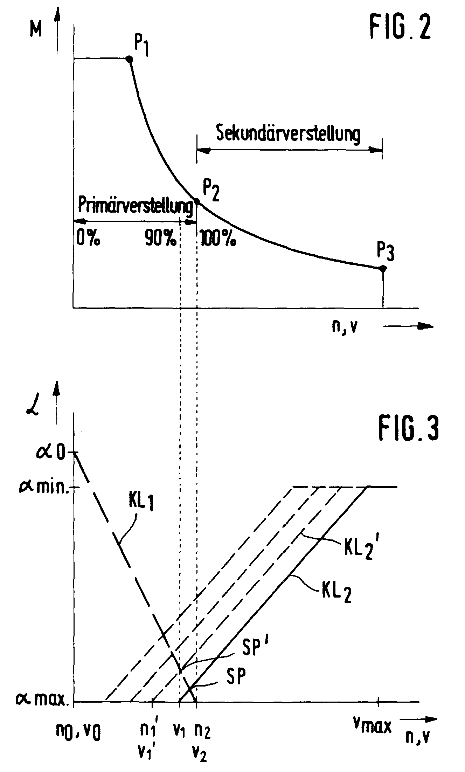

Die Kennlinie $KL_1$ zeigt in Verbindung mit Figur 2 die Primärverstellung des hydrostatischen Getriebes durch Verstellung der Hydropumpe 16, die ausgehend von einem Schwenkwinkel $\alpha_0$ von der Größe Null bei Leerlaufdrehzahl $n_0$ des Antriebsmotors 1 mit Zunahme dessen Drehzahl n (gemäß der 1. Ausgestaltung der Erfindung) bzw. der Fahrgeschwindigkeit v (gemäß der 2. Ausgestaltung der Erfindung) bis auf seinen maximalen Schwenkwinkel $\alpha_{max}$ ausgeschwenkt wird. Dementsprechend verringert sich das Übersetzungsverhältnis des hydrostatischen Getriebes, wobei in einem ersten Teilbereich bis zum Punkt $P_1$ des in Figur 2 gezeigten Drehmomentenverlaufs das von der Hydropumpe 16 abgegebene Drehmoment bei konstantem Arbeitsdruck bis zum Erreichen der Maximalleistung des Antriebsmotors 1 konstant bleibt und in einem zweiten Teilbereich hyperbolisch bis zu dem das Ende der Primärverstellung anzeigenden Punkt $P_2$ des in Fig. 2 gezeigten Drehmomentenverlaufs abfällt.

Die Kennlinie $KL_2$ entspricht der Sekundärverstellung des hydrostatischen Getriebes, die durch Verstellung des Hydromotors 18 erfolgt, der ausgehend von seinem maximalen Schwenkwinkel $\alpha_{max}$ mit zunehmender Fahrgeschwindigkeit v bis auf seinen minimalen Schwenkwinkel $\alpha_{min}$ zurückgeschwenkt wird. Mit der entsprechenden Verringerung des Übersetzungsverhältnisses des hydrostatischen Getriebes nimmt das vom Hydromotor 18 abgegebene Drehmoment bis zum Punkt $P_3$ des Drehmomentenverlaufs in Figur 2 ab.

Beide Kennlinien $KL_1$, $KL_2$ schneiden einander in einem gemeinsamen Schnittpunkt SP oberhalb der den maximalen Schwenkwinkel $\alpha_{max}$ der Hydromaschinen 16, 18 anzeigenden Abszisse in Figur 3 und definieren auf diese Weise zwischen ihren Schnittpunkten mit der Abszisse einen zweiten Fahrbereich mittlerer Fahrgeschwindigkeit, in dem beide Hydromaschinen 16, 18 gleichzeitig verstellt werden. Der Beginn dieses zweiten Fahrbereichs, bei dem die Hydropumpe 16 auf etwa 90 % ihres maximalen Hubvolumens ausgeschwenkt ist, ist durch die Fahrgeschwindigkeit $v_1$ festgelegt, sein Ende, bei dem die Hydropumpe 16 auf maximalen Schwenkwinkel $\alpha_{max}$ und der Hydromotor 18 bis auf etwa 90 % seines maximalen Hubvolumens zurückgeschwenkt ist, ist durch die Drehzahl $n_2$ des Antriebsmotors 1 (gemäß der ersten Ausgestaltung der Erfindung) bzw. durch die Fahrgeschwindigkeit $v_2$ (gemäß der zweiten Ausgestaltung der Erfindung) bestimmt.

Zwischen der Leerlaufdrehzahl $n_0$ und dem Beginn des zweiten Fahrbereichs bei $v_1$ liegt ein erster Fahrbereich niedriger Fahrgeschwindigkeit, in dem nur die Hydropumpe 16 verstellt wird. In dem sich an den zweiten Fahrbereich anschließenden, bis zur maximalen Fahrgeschwindigkeit $v_{max}$ reichenden dritten Fahrbereich höherer Fahrgeschwindigkeit erfolgt lediglich die Verstellung des Hydromotors 18.

Wie aus Figur 3 zu ersehen ist (vgl. gestrichelte, parallel zu $KL_2$ verlaufende Linien), besteht die Möglichkeit, die Kennlinie $KL_2$ des Hydromotors 18 innerhalb des ersten Fahrbereichs beliebig zu verschieben. Zu diesem Zweck ist eine Vorgabeeinrichtung 36 vorgesehen, die über einen Teilabschnitt 29' der Signalleitung 29 an die dritte Sensoreinrichtung 13 und über einen zweiten Teilabschnitt 29'' der Signalleitung 29 an die elektronische Steuereinheit 26 angeschlossen ist. Die Vorgabeeinrichtung 36 erlaubt es, durch Vorgabe jeder beliebigen Fahrgeschwindigkeit, z.B. $v_1'$, die kleiner als $v_1$ ist, den Beginn des zweiten Fahrbereichs und damit den Schnittpunkt, z.B. SP', beider Kennlinien $KL_1$, $KL_2'$ festzulegen, d.h. den ersten Fahrbereich zu verkleinern und den zweiten Fahrbereich entsprechend zu vergrößern. Über eine nicht gezeigte Leitung steht die Vorgabeeinrichtung 36 in Verbindung mit der elektronischen Steuereinheit 26 und wird von dieser in Reaktion auf die

Eingabe von $v_1'$ auf diejenige Drehzahl $n_1'$ eingestellt, die bei nicht gedrücktem Antriebsmotor 1, wenn also die sich tatsächlich einstellende Drehzahl n gleich der mit dem Gaspedal 14 vorgegebenen Solldrehzahl übereinstimmt, der vorgegebenen Fahrgeschwindigkeit $v_1'$ entspricht.

Das Betriebsverhalten des hydrostatischen Fahrantriebs gemäß der Erfindung ist nachstehend anhand deren ersten Ausgestaltung erläutert:
Im Stillstand des Radladers läuft der Antriebsmotor 1 mit Leerlaufdrehzahl $n_0$. Die Hydropumpe 16 ist auf Null-Hubvolumen entsprechend dem Schwenkwinkel $\alpha_0$ und der Hydromotor 18 auf maximalen Schwenkwinkel $\alpha_{max}$ eingestellt. Durch Betätigung des Gaspedals 14 wird die Drehzahl n des Antriebsmotors 1 erhöht, vom Drehzahlsensor 12 erfaßt und über die Signalleitung 28 der elektronischen Steuereinheit 26 gemeldet. Deren Schaltungslogik ermittelt aus der Kennlinie $KL_1$ den jeweils zugeordneten Schwenkwinkel $\alpha$ und steuert mit einem entsprechenden Steuer(strom)signal denjenigen Proportionalmagneten 22 bzw. 23 an, der der mit dem Fahrtrichtungsschalter 32 gewählten Fahrtrichtung zugeordnet ist. Der angesteuerte Proportionalmagnet 22 bzw. 23 schwenkt die Hydropumpe 16 auf den von der Schaltungslogik ermittelten Schwenkwinkel $\alpha$ aus. Sobald die Hydropumpe 16 einen ausreichenden Förderstrom abgibt, beginnt sich der Hydromotor 18 zu drehen und der Radlader setzt sich in Bewegung. Mit weiter zunehmender Drehzahl n des Antriebsmotors 1 wird die Hydropumpe 16 weiter ausgeschwenkt, so daß sich die Fahrgeschwindigkeit v des Radladers erhöht. Es erfolgt keine Ansteuerung des Proportionalmagneten 21 des Hydromotors 18; der Radlader fährt im ersten Fahrbereich.

Innerhalb des ersten Fahrbereichs setzt bei erhöhter Belastung des hydrostatischen Getriebes, beispielsweise aufgrund höherer Fahrwiderstände oder des Einsatzes des Arbeitsantriebs, die sogen. Druckregelung ein: Sobald der Arbeitsdruck in der jeweils hochdruckbelasteten Arbeitsleitung 19 bzw. 20 einen in der elektronischen Steuereinheit 26 vorgegebenen maximalen Wert überschreitet, steuert die Schaltungslogik gemäß einem gespeicherten Programm den Proportionalmagneten 22 bzw. 23 mit einem derartigen Steuer(strom)signal an, daß die Hydropumpe 16 bis auf den zur Konstanthaltung des vorgegebenen Maximalwertes des Arbeitsdrucks erforderlichen Schwenkwinkel zurückgeschwenkt wird. Auf diese Weise paßt sich die Antriebsleistung der Hydropumpe automatisch an die momentan erforderliche hydraulische Leistung an. Mit Zurücknahme des Schwenkwinkels $\alpha$ der Hydropumpe 16 in dem zwischen $P_1$ und $P_2$ befindlichen Bereich der Drehmomentenkurve nach Fig. 2 ergibt sich ein Drehmomentenanstieg.

Sobald mit dem Gaspedal 14 diejenige Solldrehzahl vorgegeben ist, die der Drehzahl $n_1'$ entspricht, auf die die Vorgabeeinrichtung 36 eingestellt ist, leitet letztere das entsprechende, vom Potentiometer 13 erzeugte Solldrehzahl-Signal zur elektronischen Steuereinheit 26 weiter, die durch Vergleich mit dem Drehzahl-Signal vom Drehzahlsensor 12, der die sich tatsächlich einstellende Drehzahl n des Antriebsmotors 1 erfaßt, feststellt, ob eine Drückung des Antriebsmotors 1 vorliegt. Ist dies nicht der Fall, dann steuert die elektronische Steuereinheit 26 den Proportionalmagneten 21 mit einem Schwenkwinkel-Signal an, das ihre Schaltungslogik ausgehend von der vom Drehzahlsensor 11 gemeldeten Ausgangsdrehzahl des Verteilergetriebes 2 stellvertretend für die momentane Fahrgeschwindigkeit v über Grund aus der Kennlinie $KL_2$ ermittelt. Der Proportionalmagnet 21 schwenkt den Hydromotor 18 in Richtung kleineren Schwenkwinkels zurück. Damit hat der zweite Fahrbereich begonnen; die Druckregelung der Hydropumpe 16 ist abgeschaltet, beide Hydromaschinen 16, 18 werden gemeinsam verstellt, wodurch sichergestellt wird, daß kein vorzeitiger Fahrgeschwindigkeits-Gleichgewichtszustand eintritt, der eine Zunahme der Fahrgeschwindigkeit verhindert. Sobald die Hydropumpe 16 bei Erreichen der Drehzahl $n_2$ des Antriebsmotors 1 auf ihren maximalen Schwenkwinkel $\alpha_{max}$ eingestellt ist, endet der zweite Fahrbereich und der dritte Fahrbereich beginnt.

Liegt hingegen aufgrund entsprechender Fahrwiderstände eine Drückung des Antriebsmotors 1 vor, verzögert die elektronische Steuereinheit 26 die Ansteuerung des Proportionalmagneten 21 entsprechend und verschiebt auf diese Weise den Beginn des zweiten Fahrbereichs in Richtung größerer Fahrgeschwindigkeit bis maximal zum Erreichen von $v_1$, bei welcher Fahrgeschwindigkeit der Hydromotor 18 entsprechend der Festlegung in der elektronischen Steuereinheit 26 zurückzuschwenken beginnt. Durch das Verschieben des Beginns des zweiten Fahrbereichs bei Drückung des Antriebsmotors 1 wird erreicht, daß das Fahrzeug bis maximal zur Fahrgeschwindigkeit $v_1$ im ersten Fahrbereich niedrigerer Fahrgeschwindigkeit fährt, um das hohe Abtriebsmoment des hydrostatischen Getriebes sowie eine schnelle Anpassung dieses Abtriebsmoments an die jeweils auftretenden Fahrwiderstände durch die Druckregelung zu nutzen, die im zweiten und dritten Fahrbereich unterbleibt.

Im dritten Fahrbereich wird der Hydromotor 18 in gleicher Weise wie im zweiten Fahrbereich mit zunehmender Fahrgeschwindigkeit v bzw. zunehmender Ausgangsdrehzahl des Verteilergetriebes 2 bis zum Erreichen seines minimalen Schwenkwinkels $\alpha_{min}$ und damit bis zur maximalen Fahrgeschwindigkeit zurückgeschwenkt.

**Patentansprüche**

1. Hydrostatischer Fahrantrieb für ein Fahrzeug, mit einem primär und sekundär verstellbaren hydrostatischen Getriebe, das wenigstens zwei Hydromaschinen in Form einer von einem Antriebsmotor des Fahrzeugs antreibbaren Hydropumpe und eines an diese über wenigstens eine Arbeitsleitung angeschlossenen Hydromotors umfaßt, die beide in ihrem jeweiligen Hubvolumen in Abhängigkeit von Steuersignalen verstellbar sind, die sich mit der Belastung des Getriebes ändern,
**dadurch gekennzeichnet,**
daß zumindest eines der Steuersignale das Ausgangssignal einer Sensoreinrichtung ist,
daß die Sensoreinrichtung die Fahrgeschwindigkeit v als tatsächliche Fahrgeschwindigkeit des Fahrzeuges über Grund erfaßt und ein entsprechendes Fahrgeschwindigkeits-Signal ausgibt, und
daß der Hydromotor (18) ausschließlich in Abhängigkeit von diesem Fahrgeschwindigkeits-Signal verstellbar ist, wobei sein Hubvolumen mit zunehmender Fahrgeschwindigkeit abnimmt.

2. Hydrostatischer Fahrantrieb nach Anspruch 1,
**dadurch gekennzeichnet,**
daß die Sensoreinrichtung ein Sensor nach dem Radar-Dopplerprinzip ist.

3. Hydrostatischer Fahrantrieb nach Anspruch 1,
**dadurch gekennzeichnet,**
daß die Sensoreinrichtung wenigstens ein Sensor zur Erfassung der Drehzahl eines nichtangetriebenen Rades des Fahrzeuges ist.

4. Hydrostatischer Fahrantrieb nach Anspruch 1, mit einem dem Hydromotor nachgeordneten Verteilergetriebe zum Antrieb der Antriebsräder mehrerer Fahrzeug-Antriebsachsen,
**dadurch gekennzeichnet,**
daß die Sensoreinrichtung eine elektronische Sensoreinrichtung (11) zum Erfassen der Eingangsdrehzahl des Verteilergetriebes (2) ist.

5. Hydrostatischer Fahrantrieb nach wenigstens einem vorhergehenden Anspruch,
**dadurch gekennzeichnet,**
daß das Steuersignal zur Verstellung der Hydropumpe (16) das von der Sensoreinrichtung (11) erzeugte Fahrgeschwindigkeits-Signal ist, welches mit zunehmender Fahrgeschwindigkeit v ein Ausschwenken der Hydropumpe (16), d.h. eine Verstellung in Richtung ihres maximalen Hubvolumens bewirkt.

6. Hydrostatischer Fahrantrieb nach wenigstens einem der Ansprüche 1-4,
**dadurch gekennzeichnet,**
daß das Steuersignal zur Verstellung der Hydropumpe (16) ein von einer weiteren, zweiten Sensoreinrichtung (12) erzeugtes, der Drehzahl n des Antriebsmotors (1) entsprechendes Drehzahl- Signal ist, welches mit zunehmender Drehzahl n ein Ausschwenken der Hydropumpe (16), d.h. eine Verstellung in Richtung ihres maximalen Hubvolumens bewirkt.

7. Hydrostatischer Fahrantrieb nach wenigstens einem der vorhergehenden Ansprüche,
**dadurch gekennzeichnet,**
daß bei Einstellung des Hydromotors (18) auf maximalem Hubvolumen die Hydropumpe (16) in Abhängigkeit von einem vom Arbeitsdruck in der Arbeitsleitung (19, 20) abgenommenen Steuersignal verstellbar ist, wobei zunehmender Arbeitsdruck eine Verstellung in Richtung minimales Hubvolumen bewirkt.

8. Hydrostatischer Fahrantrieb nach wenigstens einem der vorhergehenden Ansprüche,
**gekennzeichnet durch** eine elektronische Steuereinheit (26) zur Aufnahme der jeweiligen Steuersignale und zum Ansteuern der Hydropumpe (16) und des Hydromotors (18) zwecks Verstellung derselben mit Schwenkwinkel-Signalen, die von der elektronischen Steuereinheit (26) aus den Steuersignalen auf der Grundlage von wenigstens je einer gespeicherten Kennlinie ($KL_1$, $KL_2$, $KL_2'$) des Schwenkwinkels ($\alpha$) jeder Hydromaschine (16, 18) in Zuordnung zu dem vom jeweiligen Steuersignal erfaßten Parameter - Fahrgeschwindigkeit v, Drehzahl n, Arbeitsdruck p - abgeleitet wird.

9. Hydrostatischer Fahrantrieb nach Anspruch 8,
**dadurch gekennzeichnet,**
daß die Kennlinien ($KL_1$, $KL_2$, $KL_2'$) beider Hydromaschinen (16, 18) einen solchen gemeinsamen, vorgegebenen Schnittpunkt (SP, SP') aufweisen, daß sie einen Fahrbereich definieren, in dem die Hydropumpe (16) und der Hydromotor (18) gleichzeitig von der elektronischen Steuereinheit (26) ansteuerbar sind.

10. Hydrostatischer Fahrantrieb nach Anspruch 9,
**dadurch gekennzeichnet,**
daß der durch den Schnittpunkt (SP, SP') beider Kennlinien ($KL_1$, $KL_2$, $KL_2'$) definierte Fahrbereich ein zweiter Fahrbereich mittlerer Fahrgeschwindigkeit v ist, an den sich ein erster Fahrbereich niedrigerer Fahrgeschwindigkeit mit alleiniger Ansteuerung der Hydropumpe (16) sowie ein dritter Fahrbereich höherer Fahrgeschwindigkeit mit alleiniger Ansteuerung des Hydromotors (18) anschließen.

11. Hydrostatischer Fahrantrieb nach Anspruch 10,
**gekennzeichnet durch** eine an die elektronische Steuereinheit (26) angeschlossene Vorgabeeinrichtung (36) zum Vorgeben des Schnittpunktes (SP, SP') der Kennlinien ($KL_1$, $KL_2$, $KL_2'$) beider Hydromaschinen (16, 18) durch Verschieben der Kennlinie ($KL_2$) des Hydromotors (18) und damit des Beginns des zweiten Fahrbereichs.

**12.** Hydrostatischer Fahrantrieb nach wenigstens einem der Ansprüche 8-11,
**gekennzeichnet durch** eine dritte Sensoreinrichtung (13) zur Erfassung der jeweils eingestellten Solldrehzahl des Antriebsmotors (1) und Abgabe eines entsprechenden Steuersignals an die elektronische Steuereinheit (26), die ein Programm zur Ermittlung der Drückung des Antriebsmotors (1) aus den Steuersignalen der zweiten und der dritten Sensoreinrichtung (12, 13) enthält und mit zunehmender drückung des Antriebsmotors (1) die Kennlinie ($KL_2$) des Hydromotors (18) und damit den Beginn des zweiten Fahrbereichs in Richtung Verringerung desselben verschiebt.

**Claims**

1. Hydrostatic travel drive for a vehicle, having a primary-adjustable and secondary-adjustable hydrostatic transmission, which comprises at least two hydraulic machines in the form of a hydraulic pump drivable by a drive motor of the vehicle and a hydraulic motor connected to the hydraulic pump by way of at least one operating line, both the hydraulic pump and hydraulic motor being adjustable in their respective stroke volume in dependence upon control signals changing with the loading of the transmission,
characterized in that,
at least one of the control signals is the output signal of a sensor device,
in that the sensor device detects the travel speed v as actual travel speed of the vehicle over the ground and outputs a corresponding travel speed signal, and
in that the hydraulic motor (18) is adjustable exclusively in dependence upon this travel speed signal, whereby its stroke volume decreases with increasing travel speed.

2. Hydrostatic travel drive according to claim 1,
characterised in that,
the sensor device is a sensor based on the radar Doppler principle.

3. Hydrostatic travel drive according to claim 1,
characterized in that,
the sensor device is at least one sensor for detecting the speed of rotation of a non-driven wheel of the vehicle.

4. Hydrostatic travel drive according to claim 1, having a distributor transmission downstream of the hydraulic motor for driving the drive wheels of a plurality of vehicle drive axles,
characterized in that,
the sensor device is an electronic sensor device (11) for detecting the input speed of rotation of the distributor transmission (2).

5. Hydrostatic travel drive according to any preceding claim,
characterized in that,
the control signal for adjusting the hydraulic pump (16) is the travel speed signal generated by the sensor device (11), which signal with increasing travel speed v effects a swinging-out of the hydraulic pump (16), i.e. an adjustment in the direction of its maximum stroke volume.

6. Hydrostatic travel drive according to any of claims 1 to 4,
characterized in that,
the control signal for adjusting the hydraulic pump (16) is a speed of rotation signal generated by a further, second sensor device (12) and corresponding to the speed of rotation n of the drive motor (1), which signal with increasing speed of rotation n effects a swinging-out of the hydraulic pump (16), i.e. an adjustment in the direction of its maximum stroke volume.

7. Hydrostatic travel drive according to any preceding claim,
characterized in that,
with the setting of the hydraulic motor (18) to maximum stroke volume the hydraulic pump (16) is adjustable in dependence upon a control signal derived from the operating pressure in the operating line (19, 20), whereby increasing operating pressure effects an adjustment in the direction of minimum stroke volume.

8. Hydrostatic travel drive according to any preceding claim,
characterized by an electronic control unit (26) for receiving the respective control signals and for controlling the hydraulic pump (16) and the hydraulic motor (18) for the purpose of adjusting the same with swivel-angle signals, derived by the electronic control unit (26) from the control signals on the basis of at least one stored characteristic curve ($KL_1$, $KL_2$, $KL_2'$) of the swivel angle ($\alpha$) of each hydraulic machine (16, 18) in association with the parameter - travel speed v, speed of rotation n, operating pressure p - picked up by the respective control signals.

9. Hydrostatic travel drive according to claim 8,
characterized in that,
the characteristic curves ($KL_1$, $KL_2$, $KL_2'$) of both hydraulic machines (16, 18) have such a common, specified intersecting point (SP, SP') that they define a travel range in which the hydraulic pump (16) and the hydraulic motor (18) are simultaneously controllable by the electronic control unit (26).

**10.** Hydrostatic travel drive according to claim 9, characterized in that, the travel range defined by the intersecting point (SP, SP') of the two characteristic curves (KL$_1$, KL$_2$, KL$_2$') is a second travel range of medium travel speed v, to which adjoin a first travel range of lower travel speed with sole control of the hydraulic pump (16) and a third travel range of higher travel speed with sole control of the hydraulic motor (18).

**11.** Hydrostatic travel drive according to claim 10, characterized by a setting device (36) connected to the electronic control unit (26) for setting the intersecting point (SP, SP') of the characteristic curves (KL$_1$, KL$_2$, KL$_2$') of both hydraulic machines (16, 18) through displacement of the characteristic curve (KL$_2$) of the hydraulic motor (18) and thus of the beginning of the second travel range.

**12.** Hydrostatic travel drive according to any of claims 8 to 11, characterized by a third sensor device (13) for determining the respectively set desired speed of rotation of the drive motor (1) and for issuing an appropriate control signal to the electronic control unit (26), which unit contains a programme for detecting labouring of the drive motor (1) from the control signals of the second and the third sensor device (12, 13) and with increasing labouring of the drive motor (1) displaces the characteristic curve (KL$_2$) of the hydraulic motor (18) and thus the beginning of the second travel range in the direction of a reduction of the same.

**Revendications**

**1.** Mécanisme d'entraînement hydrostatique pour un véhicule, comportant une transmission hydrostatique réglable de façon primaire et secondaire, qui comprend au moins deux machines hydrauliques sous la forme d'une poupe hydraulique, entraînée par un moteur d'entraînement du véhicule et un moteur hydraulique, raccordé à celle-ci par au moins une conduite de travail, qui toutes deux sont réglables dans leur cylindrée respective en fonction de signaux de commande, qui varient avec la charge de la transmission, caractérisé en ce qu'au moins l'un des signaux de commande est le signal de sortie d'un dispositif à capteur, en ce que le dispositif à capteur détecte la vitesse de marche v en tant que vitesse de marche effective du véhicule sur le sol et délivre un signal de vitesse de marche correspondant, et en ce que le moteur hydraulique (18) est réglable exclusivement en fonction de ce signal de vitesse de marche, sa cylindrée diminuant lorsqu'augmente la vitesse de marche.

**2.** Mécanisme d'entraînement hydrostatique selon la revendication 1, caractérisé en ce que le dispositif à capteur est un capteur selon le principe du radar Doppler.

**3.** Mécanisme d'entraînement hydrostatique selon la revendication 1, caractérisé en ce que le dispositif à capteur est au moins un capteur pour la détection de la vitesse de rotation d'une roue non entraînée du véhicule.

**4.** Mécanisme d'entraînement hydrostatique selon la revendication 1, comportant un engrenage distributeur, monté en aval du moteur hydraulique, pour l'entraînement des roues motrices de plusieurs arbres d'entraînement de véhicule, caractérisé en ce que le dispositif à capteur est un dispositif à capteur électronique (11) pour la détection de la vitesse de rotation d'entrée de l'engrenage distributeur (2).

**5.** Mécanisme d'entraînement hydrostatique selon l'une au Moins des revendications précédentes, caractérisé en ce que le signal de commande pour le réglage de la pompe hydraulique (16) est le signal de vitesse de marche, produit par le dispositif à capteur (11) et qui, lorsque la vitesse de marche v augmente, provoque un pivotement de la pompe hydraulique (16), c'est-à-dire un réglage dans la direction de sa cylindrée maximale.

**6.** Mécanisme d'entraînement hydrostatique selon l'une au moins des revendications 1 à 4, caractérisé en ce que le signal de commande pour le réglage de la pompe hydraulique (16) est un signal de vitesse de rotation produit par un autre deuxième dispositif à capteur (12), correspondant à la vitesse de rotation n du moteur d'entraînement (1) et qui, lorsque la vitesse de rotation n augmente, provoque un pivotement de la pompe hydraulique (16), c'est-à-dire un réglage dans la direction de sa cylindrée maximale,

**7.** Mécanisme d'entraînement hydrostatique selon l'une au Moins des revendications précédentes, caractérisé en ce qu'en cas de réglage du moteur hydraulique (18) sur la cylindrée maximale, la pompe hydraulique (16) est réglable en fonction d'un signal de commande, prélevé de la pression de travail dans la conduite de travail (19, 20), une pression de travail croissante provoquant un réglage dans la direction de la cylindrée minimale.

**8.** Mécanisme d'entraînement hydrostatique selon l'une au moins des revendications précédentes, caractérisé par une unité de commande électronique (26) destinée à recevoir les signaux de commande respectifs et à commander la pompe hydraulique (16) et le moteur hydraulique (18) en vue du réglage de ceux-ci avec des signaux d'angle de pivotement, qui sont dérivés de l'unité de commande électronique (26) à partir des signaux de commande, sur la base d'au moins une courbe caractéristique ($KL_1$, $KL_2$, $KL_{2'}$) mémorisée de l'angle de pivotement ($\alpha$) de chaque machine hydraulique (16, 18), en corrélation avec le paramètre - vitesse de marche v, vitesse de rotation n, pression de travail p - détecté par le signal de commande respectif.

9. Mécanisme d'entraînement hydrostatique selon la revendication 8, caractérisé en ce que les courbes caractéristiques ($KL_1$, $KL_2$, $KL_{2'}$) des deux machines hydrostatiques (16, 18) présentent un point d'intersection (SP, SP') commun, donné, tel qu'ils définissent un domaine de marche dans lequel la pompe hydraulique (16) et le moteur hydraulique (18) peuvent être commandés simultanément par l'unité de commande électronique (26).

10. Mécanisme d'entraînement hydrostatique selon la revendication 9, caractérisé en ce que le domaine de marche défini par le point d'intersection (SP, SP') des deux courbes caractéristiques ($KL_1$, $KL_2$, $KL_{2'}$), est un deuxième domaine de marche de vitesse de marche v moyenne, auquel font suite un premier domaine de marche de basse vitesse de marche avec commande exclusive de la pompe hydraulique (16) ainsi qu'un troisième domaine de marche de plus grande vitesse de marche avec commande exclusive du moteur hydraulique (18).

11. Mécanisme d'entraînement hydrostatique selon la revendication 10, caractérisé par un dispositif de sélection (36), raccordé à l'unité de commande électronique (26), pour la sélection du point d'intersection (SP, SP') des courbes caractéristiques ($KL_2$, $KL_2$, $KL_{2'}$) des deux machines hydrauliques (16, 18, par déplacement de la courbe caractéristique ($KL_2$) du moteur hydraulique (18) et donc du début du deuxième domaine de marche.

12. Mécanisme d'entraînement hydrostatique selon l'une au moins des revendications 8 à 11, caractérisé par un troisième dispositif à capteur (13) pour la détection de la vitesse de rotation de consigne réglée dans chaque cas du moteur d'entraînement (1) et délivrance d'un signal de commande correspondant à l'unité de commande électronique (26), qui contient un programme pour la détermination de la compression du moteur d'entraînement (1), à partir des signaux de commande du deuxième et troisième dispositifs à capteur (12, 13) et, lorsque la compression du moteur d'entraînement (1) augmente, déplace la courbe caractéristique ($KL_2$) du moteur hydraulique (18) et donc le début du deuxième domaine de marche, en direction de sa réduction.

FIG.1

FIG. 2

FIG. 3